# EUROPÄISCHE PATENTSCHRIFT

(11) **EP 0 571 591 B1**
(45) Veröffentlichungstag und Bekanntmachung des Hinweises auf die Patenterteilung: **06.03.1996**
(21) Anmeldenummer: 92924703.9
(22) Anmeldetag: 10.12.1992
(51) Int. Cl.: B65H 63/032, D01H 13/16, G01B 11/10, G01B 7/06

(54) **VERFAHREN UND VORRICHTUNG ZUR REINIGUNG DER SENSORFLÄCHEN EINER GARNÜBERWACHUNG**
PROCESS AND DEVICE FOR CLEANING THE SENSOR SURFACES OF A THREAD MONITORING SYSTEM
PROCEDE ET DISPOSITIF DE NETTOYAGE DES SURFACES DE DETECTION D'UNE INSTALLATION DE SURVEILLANCE DU FIL

(30) Priorität: 12.12.1991 DE 4140952
(43) Veröffentlichungstag der Anmeldung: 01.12.1993
(73) Patentinhaber: Rieter Ingolstadt Spinnereimaschinenbau Aktiengesellschaft, D-85046 Ingolstadt (DE)
(72) Erfinder: POZZO, Hans, D-8070 Ingolstadt (DE)
(86) Internationale Anmeldenummer: EP9202851
(87) Internationale Veröffentlichungsnummer: WO9312028

(56) Entgegenhaltungen:
- EP-A- 0 322 471
- CH-A- 535 711
- DE-A- 2 621 900
- FR-A- 1 325 212

## Beschreibung

Die Erfindung betrifft ein Verfahren zum Reinigen der Sensorflächen einer Garnüberwachung, die an Spinnmaschinen eingesetzt wird zur Überwachung des Garns und/oder der Garnqualität. Die Sensorfläche ist jene Fläche, die ein optisch oder kapazitiv arbeitendes Überwachungsverfahren benötigt, um eine dem physikalischen Prinzip entsprechende Signalerfassung zu gewährleisten. Die Vorrichtung dient zur Durchführung des Verfahrens.

Die Sensorfläche einer Garnüberwachung ist im Spinnprozeß einer Verschmutzung ausgesetzt. Die Funktionsfähigkeit der Sensorfläche für die Arbeitsweise der Garnüberwachung ist zu gewährleisten.

Die berührungslose Überwachung und Abtastung des Garns erfolgt getrennt für jede Spinnstelle. Der Einsatz eines Garnüberwachungssystems ist für die Spinnmaschine eine wichtige Auswerteeinheit. Die optische oder kapazitive Garnüberwachung als Bestandteil des Garnüberwachungssystems liefert eine Information zum Vorhandensein des Garns und/oder der Garnstärke bzw. Garnqualität. Dazu müssen die Sensorflächen in unmittelbarer Nähe des Garns positioniert werden.

Charakteristisch für diese optischen oder kapazitiven Überwachungsverfahren ist, daß das Garnüberwachungssystem eine Garnüberwachung besitzt, die einen U-förmigen Meßspalt hat. Innerhalb dieses Meßspaltes wird der laufende Faden berührungslos geführt. Im Prinzip ist die optische oder kapazitive Garnüberwachung so gestaltet, daß sich als seitenbegrenzende Flächen innerhalb des Meßspaltes in gleicher, horizontaler Ebene zwei Sensorflächen gegenüberliegen.

Da während des Spinnprozesses erhebliche Mengen von Staub, Schmutzpartikeln und Avivage anfallen, lagern sich diese auf den Sensorflächen ab und haben zur Folge, daß diese Sensorflächen der Garnüberwachung schnell einen Verschmutzungszustand erreichen können, der zu verfälschten Meßwerten führt.

Da dieser Verschmutzungszustand für die einzelnen Garnüberwachungen der Spinnstellen unterschiedlich ist und somit auch keine gesicherten Voraussagen für einen kritischen Verschmutzungszustand getroffen werden können, muß nach dem Stand der Technik in vorbeugenden Zeitabständen ein Reinigungsvorgang der Sensorflächen veranlaßt werden.

Garnüberwachungen gehobener Preisklasse besitzen teilweise eine Auswerteeinheit, die die Entwicklung eines kritischen Funktionszustandes über einen zweiten Signalausgang anzuzeigen vermag, dennoch bleibt die Notwendigkeit der Reinigung der Sensorflächen der Garnüberwachung bestehen.

Eine bekannte Möglichkeit der Reinigung ist das Ausblasen des Meßspaltes bzw. das gezielte Beblasen der dort installierten Sensorflächen, um die Verunreinigungen zu entfernen bzw. den laufenden Faden ständig vor dessen Eintritt in den Meßraum so zu beblasen, daß die vom Faden mitgeführten frei beweglichen Fasern eine Richtungsänderung erhalten und sich nicht auf der Optik bzw. den Kondensatorplatten ablagern können. Eine zusätzliche Blasvorrichtung und deren exakte Positionierung ist erforderlich. Weiterhin kann klebrige Avivage oftmals nicht von der Sensorfläche abgelöst werden. Nur die Beblasung bringt keinen ausreichenden Reinigungseffekt.

Eine andere Möglichkeit der Reinigung ist mechanischer Natur. Es existiert auch die Praxis, daß das Bedienpersonal bei gemeldetem Funktionsausfall einer Garnüberwachung mit einem Pinsel manuell die Reinigung des Meßspaltes vornimmt, d.h. die optisch oder kapazitiv arbeitenden Sensorflächen mechanisch reinigt. Die entsprechende Spinnstelle ist dabei stillgesetzt.

Die DE-OS 40 01 255 beschreibt, wie mittels einer rotierenden Profilbürste, die aus elastischem Material besteht, der Meßraum immer dann mechanisch abgeschabt wird, wenn kein Faden vorhanden ist (z.B. nach Fadenbruch). Diese rotierende Bürste kann mit einer Blas- und Absaugvorrichtung kombiniert sein und ist in einem vor den Arbeitsstellen verfahrbaren Wartungsautomaten installiert. Insgesamt ist diese Lösung sehr kostenintensiv und setzt für das Reinigungsverfahren voraus, daß kein Fadenlauf vorhanden ist. Die Reinigung ist somit an ein Ereignis gebunden, welches in Zukunft immer weiter reduziert werden muß. Die Alterung des elastischen Materials oder ein Verkanten der Profilbürste kann zu Verkratzungen der optisch aktiven Fläche führen.

Die DE-A-26 21 900 zeigt einen selbstreinigenden, optischen Fadenwächter einer Spinnmaschine zur berührungslosen Überwachung des Vorhandenseins und der Längsbewegung eines kreisenden Fadens im Bereich der Einmündung eines Garnabzugsrohres bzw. an einer ballonbildenden Fadenöse. Lichtsender als auch Lichtempfänger sind hinter einem lichtdurchlässigen Deckel angeordnet. Um eine Verschmutzung des Deckels und damit eine Funktionsbeeinträchtigung des Fadenwächters zu vermeiden, wird das erzeugte Garn, das bei einer hohen Geschwindigkeit eine Kreisbewegung macht, eng anliegend auf dem lichtdurchlässigen Deckel abgezogen und befreit dabei diesen vom Schmutz. In der Praxis hat sich gezeigt, daß der direkte Reibungskontakt zwischen Garnkörper und lichtdurchlässigem Deckel unter Einwirkung der härteren Schmutzbestandteile nach relativ geringer Nutzungsdauer zu einem Verkratzen der Deckeloberfläche führt, so daß diese blind werden können. Das beeinträchtigt die Fadenwächterfunktion nachteilig.

Aufgabe der Erfindung ist, die Sensorflächen der Garnüberwachung wirksam zu reinigen, so daß eine Funktionseinschränkung des Meßverfahrens durch Verschmutzung vermieden wird.

Diese Aufgabe wurde durch ein Verfahren gemäß Anspruch 1 und eine Vorrichtung gemäß Anspruch 3 gelöst.

Die Erfindung geht davon aus, den Faden selbst in den Reinigungsvorgang einzubeziehen. Ein weiteres Merkmal ist, daß die Garnüberwachung in einen Fadenlauf installiert werden muß, der eine Changierung aufweist. Die Größe des Meßspaltes ist somit abhängig von der Größe der Changierbewegung. Es kann die Garnüberwachung sowohl oberhalb der Abzugswalze im Fadenlauf zwischen Abzugswalze und Friktionswalze installiert sein als auch unterhalb zwischen Abzugswalze und Fadenabzugsröhrchen. Letzteres unter dem Aspekt, daß Maschinen zur Vermeidung der Rillenbildung an der Oberfläche der Abzugswalze im benannten Abschnitt eine geringe Changierung besitzen. Zu diesem Zweck ist der in der Draufsicht auf die Garnüberwachung U-förmige Meßspalt so gestaltet, daß die jeweilige optisch oder kapazitiv arbeitende Seitenfläche (Sensorfläche) parallel zum Fadenlauf in den Umkehrpunkten der Changierbewegung angeordnet ist. In der Vorderansicht des Meßraumes zeigt sich eine gleichschenklige, trapezförmige Fläche, wobei die gedachte Symetrieachse eine momentane, mittlere Position der Fadenchangierung ist. Die kleinere Parallelseite des Trapezes zeigt in Richtung einlaufenden Faden.

Es wurde weiterhin gefunden, daß ein wirkungsvoller Reinigungsvorgang mit Hilfe des laufenden Fadens, ohne das vorhergehende Merkmal, auch dann realisiert werden kann, wenn sich der laufende Faden der jeweiligen Sensorfläche bis auf einen geringen Abstand nähert. Dieser Abstand ist fest einzustellen. Zu diesem Zweck wurde (in Vorderansicht gesehen), in Ebene zu den Parallelseiten der trapazförmigen Flächenansicht des Meßraumes je ein Anschlag befestigt, der über die Sensorfläche hinausragt. Der Anschlag ragt somit in den Changierbereich des Fadens hinein. Das trifft für beide Sensorflächen des Meßspaltes zu. Oberhalb und unterhalb der Sensorfläche wird somit der Faden begrenzt, so daß er in einem exakt definierten Abstand parallel zur jeweiligen Sensorfläche verläuft. Der Anschlag ist verstellbar und auf einen gewählten Wert fixierbar, so daß der senkrechte Abstand zwischen Faden und Sensorfläche einen konstanten Wert hat. Der Anschlag ist aus einem verschleißfesten Material und weist in Berührung mit dem Faden keine Kanten auf. Die Changierung ermöglicht, daß der laufende Faden sich jeweils einer der beiden Sensorflächen nähern kann. Mit Auftreffen des Fadens auf die Anschläge einer Sensor-fläche wird exakt eine Distanz zwischen Faden und Sensorfläche erreicht, die erst jetzt den gewünschten Reinigungsvorgang ermöglicht. Der Reinigungsvorgang wird dadurch erreicht, daß
- die vorhandene Haarigkeit des Fadens einen "Pinseleffekt" gegenüber der optischen aktiven Fläche ermöglicht,
- durch den laufenden Faden eine um ihn sich bildende Grenzschichtströmung einen Luftzug erzeugt, der eine wirksame Kraft auf abgelagerten Staub und Fasern ausübt,
- die Fadenlaufunruhe sichert, daß ein Flächenabschnitt gereinigt wird, der ca. der 4-fachen Fadenbreite entspricht.

Der Reinigungsvorgang dauert an bis der Faden wieder in die entgegengesetzte Richtung changiert wird. Diese drei Effekte zugleich auszunutzen ist nur möglich durch die exakte Fixierung des Fadens in den Umkehrpunkten der Changierung gegenüber der Sensorfläche.

Die Haarigkeit des Fadens garantiert ein vorhandenes Abspreizen von Einzelfasern, die durch den geringen Abstand zwischen Faden und Sensorfläche beim Berühren einen "Pinseleffekt" ermöglichen. Je größer die Haarigkeit des Fadens, um so günstiger der "Pinseleffekt". Durch den fixierten Abstand kann die sich um den laufenden Faden ausbildende Grenzschichtströmung wirkungsvoll ausgenutzt werden, um abgelagerten Staub und Einzelfasern durch den Luftstrom zu beseitigen. Die existierende Laufunruhe des Fadens in Verbindung mit den beiden beschriebenen Effekten bewirkt eine Reinigungsschneiße auf der Sensorfläche, die ca. dem 4-fachen der Fadenstärke entspricht. Das bewirkt, daß der Faden stets durch die Sensorfläche überwacht werden kann.

Staub und Ablagerungen von Fasern werden wirkungsvoll beseitigt.

Ein entscheidender Vorteil der Erfindung ist, daß die Reinigung bei laufendem Betrieb der Spinnstellen erreicht wird und realisierbar ist mit unerwartet geringfügigen, technischen Veränderungen.

Bei einem Dauerbetrieb der Spinnmaschine ist die Häufigkeit des zeitlich begrenzten Reinigungsvorganges ausreichend, um eine Beeinflussung des optischen Meßverfahrens durch Verschmutzungen zu vermeiden.

Das Verfahren und die Vorrichtung zum Reinigen der Sensorflächen der Garnüberwachung werden an Hand eines Ausführungsbeispiels näher erläutert. Es zeigen:
- Figur 1:: Fadenlauf an einer OE-Spinnmaschine mit Positionierung der Garnüberwachung,
- Figur 2:: Garnüberwachung mit U-förmigem Spalt im Fadenlauf,
- Figur 3:: Ausschnitt aus der Vorderansicht der Garnüberwachung mit trapezförmiger Spaltfläche,
- Figur 4:: Parallelität zwischen Faden und Sensor-Fläche bei Annäherung,

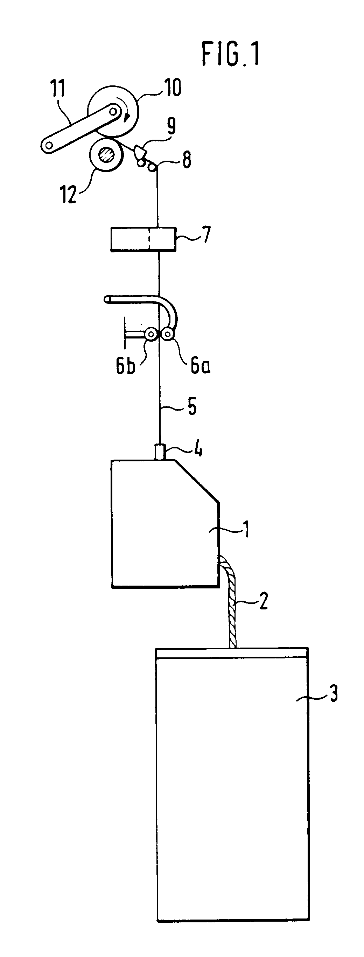

Die Figuren sind nicht maßstäblich. Gemäß Fig. 1 wird die Spinnbox 1 einer OE-Spinnmaschine mit einem Faserband 2 aus einer Vorlagekanne 3 gespeist. Nach Figur 1 wird über das Fadenabzugsrohr 4 der Faden 5 mittels der Abzugswalzen 6a und 6b abgezogen. Von hier wird der Faden weitertransportiert über die Fadenumlenkstange 8 und durch Changierbewegung des Fadenführers 9 über die Breite einer Garnspule 10 aufgewicklet, wobei die Garnspule über den paarweisen Spulenhalter 11 gehalten wird. Der Antrieb der Garnspule 10 erfolgt über die Friktionswalze 12.

Um den Fadenlauf 5 zu überwachen, findet in der Textilindustrie eine optisch oder kapazitiv arbeitende Garnüberwachung Verwendung. Die Garnüberwachung besitzt einen Meßspalt, der U-förmig ausgebildet ist und den Faden berührungslos umgibt, so daß der Faden zwischen den beiden gegenüberliegenden Sensorflächen läuft.

Nach Fig. 1 ist die Installation einer Garnüberwachung 7 in den Fadenlauf oberhalb der Abzugswalzen 6a, 6b dargestellt. Diese Installation könnte auch unterhalb der Abzugswalzen im Fadenlauf zwischen Abzugswalzen 6a, 6b und Abzugsrohr 4 erfolgen. Entscheidend ist, daß eine Changierbewegung des Fadens 5 vorliegt. Somit muß der Meßspalt der Garnüberwachung so ausgebildet sein, daß er in seiner Positionierung eine Fadenchangierung nicht behindert.

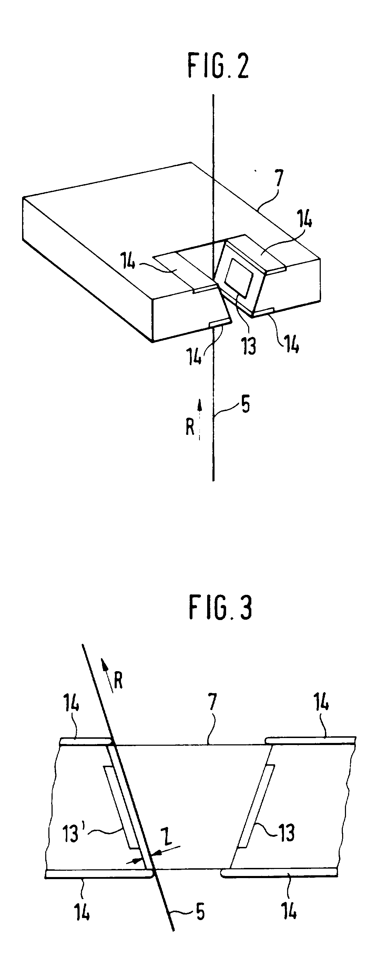

Nach Figur 2 ist eine der Sensorflächen 13 erkennbar, wobei die gegenüberliegende Fläche in der Figur nicht sichtbar ist. Der Meßspalt umschließt den Faden U-förmig. Die Sensorflächen (13, 13') sind gegenüber dem Fadenlauf geneigt und stellen die Begrenzung d.h. die Umkehrpunkte der Changierung dar.

Die Einzelheiten der Erfindung sind dargestellt in Figur 3. Es ist dargestellt, daß der Meßspalt in der Vorderansicht eine gleichseitige, trapezförmige Fläche bildet. Die gleichseitigen Flächen tragen die jeweils gegenüberliegenden Sensorflächen 13. Diese Sensorflächen sind bei einem optischen Überwachungsverfahren lichtdurchlässig und bestehen in der Regel aus einem Kunststoffmaterial oder Glas. Bei Anwendung eines kapazitiv arbeitenden Überwachungsverfahrens bestehen die Kondensatorplattten aus einem Edelstahl. Zu erkennen ist, daß diese Sensorflächen sich in einer horizontalen Ebene gegenüberliegen. Diese Sensorflächen besitzen einen durch das Gehäuse der Garnüberwachung 7 bedingten Abstand zu den einzelnen Deckplatten 14. Zu jeder Sensorfläche 13, 13' ist oberhalb und unterhalb je eine Deckplatte 14 angeordnet, die so weit über die Sensorfläche 13, 13' hinausragt, daß (wie in Figur 3 gezeigt) der durch die Changierung anliegende Faden 5 genau in einem definierten, senkrechten Abstand Z parallel zur Sensorfläche verlaufen muß. Dieser Abstand ist ein aus dem Bereich von 0,3 bis 0,5 mm ausgewählter Wert, der mit 0,4 mm ein Optimum für die Durchführung des Verfahrens darstellt.

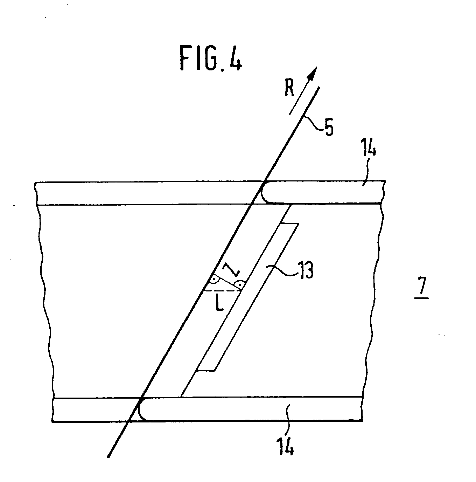

Vorzugsweise ist nach Figur 4 ein senkrechter Abstand Z von 0,4 mm skizziert. Dieser senkrechte Abstand Z von 0,4 mm bestimmt die Parallelität zwischen Faden 5 und Sensor-Fläche 13. Aus dem dargestellten ergibt sich, daß die Deckplatte 14 folglich um einen Längenbetrag über die Sensor-Fläche hinausragen muß, der der Länge der Hypothenuse L des (in Figur 4 nicht maßstäblich dargestellten ) Dreiecks entsprechen muß. Diese Deckplatten 14 sind aus einem verschleißfestem Material wie z.B. Keramik oder Edelstahl und besitzen keine Kanten in der Berührung mit dem Fadenlauf.

Mit Changierbewegung des Fadens trifft natürlich dieser auf jeweils 1 Paar der Deckplatten 14 auf. Der Reinigungsvorgang erfolgt stets für die Zeitdauer des Auftreffens des Fadens auf die paarweise angeordneten Deckplatten bis zum Zurückführen des Fadens von den Deckplatten durch den Fadenführer.

Durch den konstanten Abstand Z wird verhindert, daß der laufende Faden auf der Sensorfläche anliegt. Durch die Haarigkeit des Garnes streifen die abgespreizten Fasern über die optisch aktive Fläche und reinigen sie von Staub und abgelagerten freien Fasern. Neben diesem "Pinseleffekt" wird zugleich ein anderer Effekt ausgenutzt. Die sich um den laufenden Faden bildende Grenzschichtströmung führt zu einem Luftzug, der zusätzlich die optisch aktive Fläche erreicht und reinigt.

## Patentansprüche

1. Verfahren zur Reinigung der Sensorflächen einer berührungslosen Garnüberwachung an einer Spinnmaschine, dadurch gekennzeichnet, daß der Faden im Bereich der Fadenchangierung überwacht wird, und daß der Faden zwischen den Sensorflächen (13, 13') hin und her bewegt wird, wobei der Faden auf die jeweilige Sensorfläche zubewegt und in einem Abstand von der Sensorfläche in seiner Bewegungsrichtung umgekehrt wird, so daß durch den Fadenlauf auf der Sensorfläche befindliche Ablagerungen beseitigt werden.

2. Verfahren nach Anspruch 1, dadurch gekennzeichnet, daß der laufende Faden (5) bei Annäherung an eine Sensorfläche (13) parallel zu dieser und somit in einem senkrechten, konstant gehaltenen Abstand (Z) zur Sensorfläche (13) geführt wird.

3. Vorrichtung zur Durchführung des Verfahrens nach Anspruch 1, wobei die berührungslos arbeitende Garnüberwachung einen U-förmigen Meßspalt besitzt, so daß die beiden Sensorflächen gegenüberliegend angeordnet sind, dadurch gekennzeichnet, daß im Changierbereich zwischen Abzugswalze und Friktionswalze oder unterhalb der Abzugswalze die Sensorflächen (13, 13') der Garnüberwachung positioniert sind, wobei die Mitte des Meßspaltes in der Mitte der Changierbreite angeordnet ist und der Meßspalt durch einen Anschlag (14) begrenzt ist, der im Randbereich der Changierbreite liegt, maximal im Umkehrpunkt des Changierfadens angeordnet ist.

4. Vorrichtung gemäß Anspruch 3, dadurch gekennzeichnet, daß die Sensorflächen (13, 13') der Garnüberwachung je einen, gegenüberliegenden Anschlag (14) haben, so daß der laufende Faden diesen Anschlag berührt.

5. Vorrichtung gemäß Anspruch 3, dadurch gekennzeichnet, daß oberhalb und unterhalb jeder Sensorfläche (13, 13') ein Anschlag (14) angeordnet ist, der in den Changierbereich hineinragt, so daß der Faden diesen Anschlag berührt und kurzzeitig in konstantem, senkrechten Abstand parallel zur Sensorfläche geführt wird.

6. Vorrichtung gemäß Anspruch 5, dadurch gekennzeichnet, daß der Anschlag (14) aus verschleißfestem Material ist.

7. Vorrichtung gemäß Anspruch 5, dadurch gekennzeichnet, daß der Anschlag (14) im Bereich 0,3 mm bis 0,5 mm verstellbar und auf einen gewählten Wert fixierbar ist, so daß der senkrechte Abstand zwischen Faden und Sensorfläche einen konstanten Wert hat.

8. Vorrichtung nach Anspruch 7, dadurch gekennzeichnet, daß der senkrechte Abstand (Z) zwischen Sensorfläche (13) und Faden (5) mit 0,4 mm ein Optimum für die Reinigung darstellt.

## Claims

1. A method of cleaning the sensor surfaces of a contact-free yarn-monitoring device on a spinning machine, **characterized in that** the thread is monitored in the traversing region of the thread, and the thread is reciprocated between the sensor surfaces (13, 13'), wherein the thread is moved up to the respective sensor surface and is reversed in the direction of movement thereof at a distance from the sensor surface, so that deposits occurring on the sensor surface as a result of the passage of the thread are eliminated.

2. A method according to Claim 1, **characterized in that** as the moving thread (5) approaches a sensor surface (13) it is guided parallel thereto and therefore at a constantly maintained vertical distance (**Z**) from the sensor surface (13).

3. A device for performing the method according to Claim 1, wherein the contact-free yarn-monitoring device has a U-shaped measurement gap, so that the two sensor surfaces are arranged opposite each other, **characterized in that** the sensor surfaces (13, 13') of the yarn-monitoring device are positioned in the traversing region between the draw-off roller and the friction roller or below the draw-off roller, wherein the centre of the measurement gap is situated in the middle of the traversing width and the measurement gap is limited by a stop (14) situated in the edge region of the traversing width [and] is situated as far as possible at the reversal point of the traversing thread.

4. A device according to Claim 3, **characterized in that** the sensor surfaces (13, 13') of the yarn-monitoring device each have one opposing stop (14), so that the moving thread touches the said stop.

5. A device according to Claim 3, **characterized in that** a [respective] stop (14) projecting into the traversing region is situated above and below each sensor surface (13, 13'), so that the thread touches the said stop and is briefly guided at a constant vertical distance parallel to the sensor surface.

6. A device according to Claim 5, **characterized in that** the stop (14) consists of wear-resistant material.

7. A device according to Claim 5, **characterized in that** the stop (14) is adjustable in the range of from 0·3 mm to 0·5 mm and can be set to a selected value, so that the vertical distance between the thread and the sensor surface has a constant value.

8. A device according to Claim 7, **characterized in that** the optimum vertical distance (**Z**) between the sensor surface (13) and the thread (5) for cleaning is 0·4 mm.

## Revendications

1. Procédé de nettoyage des surfaces de détection d'une installation de surveillance sans contact du fil sur un métier à filer, caractérisé en ce que le fil est surveillé dans la zone du va-et-vient du fil et que le fil est soumis à un mouvement de va-et-vient entre les surfaces (13, 13') de détection, le fil étant avancé vers la surface de détection respective et la direction de son mouvement étant inversée à une distance de la surface de détection si bien que des dépôts se trouvant sur la surface de détection sont éliminés par le passage du fil.

2. Procédé selon la revendication 1, caractérisé en ce que le fil en cours de production (5) est mené de façon parallèle à une surface (13) de détection, en s'y approchant, et, de ce fait, à une distance (Z) verticale maintenue constante par rapport à la surface (13) de détection.

3. Dispositif pour la mise en oeuvre du procédé selon la revendication 1, l'installation de surveillance du fil travaillant sans contact comportant une fente de mesure en forme d'U de manière que les deux surfaces de détection sont disposées de façon opposée, caractérisé en ce que les surfaces (13, 13') de détection pour la surveillance du fil sont positionnées soit dans la zone du va-et-vient entre l'arbre délivreur et le rouleau à friction soit au-dessous du cylindre délivreur, le milieu de la fente de mesure étant disposé au milieu de l'étendu du mouvement de va-et-vient et la fente de mesure étant limitée par une butée (14), située dans le domaine périphérique de l'étendu du mouvement de va-et-vient et disposée au maximum dans le point de rebroussement du fil soumis au mouvement de va-et-vient.

4. Dispositif selon la revendication 3, caractérisé en ce que les surfaces (13, 13') de détection de l'installation de surveillance du fil comportent chacune une butée (14) située en face si bien que le fil en cours de production touche cette butée.

5. Dispositif selon la revendication 3, caractérisé en ce qu'au-dessus et au-dessous de chaque surface (13, 13') de détection est disposée une butée (14) qui s'étend dans le domaine du mouvement de va-et-vient de manière que le fil touche cette butée et est mené à court temps à une distance verticale constante de façon parallèle par rapport à la surface de détection.

6. Dispositif selon la revendication 5, caractérisé en ce que la butée (14) consiste en une matière inusable.

7. Dispositif selon la revendication 5, caractérisé en ce qu'un réglage de la butée (14) de l'ordre de 0,3 mm à 0,5 mm peut être effectué et que la butée peut être fixée à une valeur choisie de sorte que l'écart vertical entre le fil et la surface de détection présente une valeur constante.

8. Dispositif selon la revendication 7, caractérisé en ce que l'écart (Z) vertical entre la surface (13) de détection et le fil (5) de 0,4 mm constitue un optimum pour le nettoyage.
